# FASCICULE DE BREVET EUROPEEN

(11) **EP 2 345 323 B1**
(45) Date de publication et mention de la délivrance du brevet: **25.07.2012**
(21) Numéro de dépôt: 10196991.3
(22) Date de dépôt: 24.12.2010
(51) Int. Cl.: A01G 23/095

(54) **Véhicule de façonnage et fagotage**
Fahrzeug zur Formung und Bündelung
Hewing and bundling vehicle

(30) Priorité: 19.01.2010 FR 1050318
(43) Date de publication de la demande: 20.07.2011
(73) Titulaire: Centre National Du Machinisme Agricole, Du Genie Rural Des Eaux Et Des Forets (Cemagref), 92160 Antony (FR)
(72) Inventeur: Bonicel, Jean-François, 34090, MONTPELLIER (FR); Naud, Olivier, 34920, Le Crès (FR); Rombaut, Marc, 34820, TEYRAN (FR)
(74) Mandataire: Laget, Jean-Loup

(56) Documents cités:
- FR-A1- 2 550 988
- GB-A- 2 070 906
- US-A- 3 624 756
- US-A- 4 219 057

## Description

### Domaine technique de l'invention

La présente invention se rapporte à un véhicule pour chantier forestier. En particulier, l'invention concerne un camion de façonnage et de fagotage.

### Etat de la technique

Il est connu de réaliser un chantier forestier en deux temps, comme décrit dans le document US-A-4219057.

Dans un premier temps, un véhicule équipé d'une machine de façonnage accède au chantier par un chemin forestier. Le véhicule est par exemple un porteur à chenille. La machine de façonnage permet de séparer les arbres en grumes et rémanents (branches et cimes). Les rémanents sont stockés sur le côté du chemin. A la fin de cette étape, le véhicule équipé de la machine de façonnage évacue le chantier. Les grumes peuvent être évacuées par camion.

Dans un deuxième temps, un camion équipé d'une fagoteuse accède au chantier. La fagoteuse est utilisée pour rassembler les rémanents en fagots.

En fonction des disponibilités des véhicules de chantier, il peut s'écouler par exemple entre 5 jours et 6 mois entre le façonnage et le fagotage.

Ainsi, la réalisation complète d'un chantier forestier implique une durée importante et des coûts, notamment coûts d'équipement, élevés.

### Résumé de l'invention

Un problème que la présente invention propose de résoudre est de fournir un véhicule pour chantier forestier, qui ne présente pas au moins certains des inconvénients précités de l'art antérieur. En particulier, un but de l'invention est de réduire la durée et le coût du chantier.

La solution proposée par l'invention est un véhicule pour chantier forestier comprenant une fagoteuse, caractérisé par le fait qu'il comprend également une machine de façonnage et un dispositif de manipulation, ladite machine de façonnage comprenant une tête de façonnage et un plateau de récupération des rémanents, ledit dispositif de manipulation étant apte à saisir des rémanents dans ledit plateau de récupération et à les amener dans la fagoteuse pendant le fonctionnement de la machine de façonnage.

Grâce à ces caractéristiques, le véhicule permet de réaliser simultanément des opérations de façonnage et de fagotage. Il n'est pas nécessaire de réaliser le chantier en deux temps, avec deux véhicules équipés d'outils différents. Il n'est pas non plus nécessaire de stocker des rémanents non fagotés sur le chantier. Le véhicule permet donc un gain de temps et une économie d'équipement. Le véhicule peut être un véhicule automoteur, par exemple un tracteur, ou une remorque destinée à être tractée.

De préférence, ledit plateau de récupération comprend un premier panneau et un deuxième panneau articulés, ledit véhicule présentant un mode de travail dans lequel ladite tête de façonnage est située au-dessus desdits premier et deuxième panneaux, et un mode de déplacement dans lequel ledit premier panneau est disposé sensiblement verticalement et forme une paroi latérale du véhicule, ledit deuxième panneau étant disposé sensiblement horizontalement et forme une paroi de dessus dudit véhicule, la tête de façonnage étant située à l'intérieur de l'espace délimité par ladite paroi latérale et ladite paroi de dessus.

Avantageusement, ladite machine de façonnage est montée sur un chariot sur rail permettant un déplacement de la machine de façonnage entre le mode de travail et le mode de déplacement.

Selon un mode de réalisation, ledit dispositif de manipulation est une grue à grappin.

Avantageusement, ladite machine de façonnage comprend au moins un support à pieds télescopiques.

L'invention propose aussi l'utilisation du véhicule ci-dessus, comprenant le fait de saisir des rémanents avec ledit dispositif de manipulation dans ledit plateau de récupération, et de rassembler les rémanents saisis en fagot avec la fagoteuse, pendant le fonctionnement de la machine de façonnage.

### Brève description des figures

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective d'un camion selon un mode de réalisation de l'invention, en mode de déplacement, et
- les figures 2 et 3 sont des vues en perspective d'un chantier forestier dans lequel se trouve le camion de la figure 1, en mode de travail.

### Description détaillée d'un mode de réalisation de l'invention

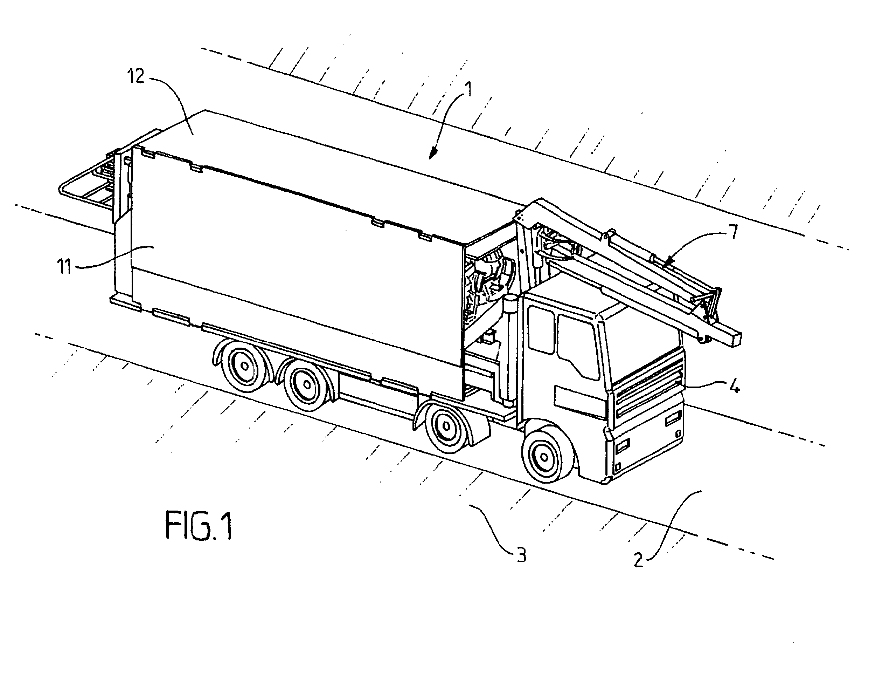

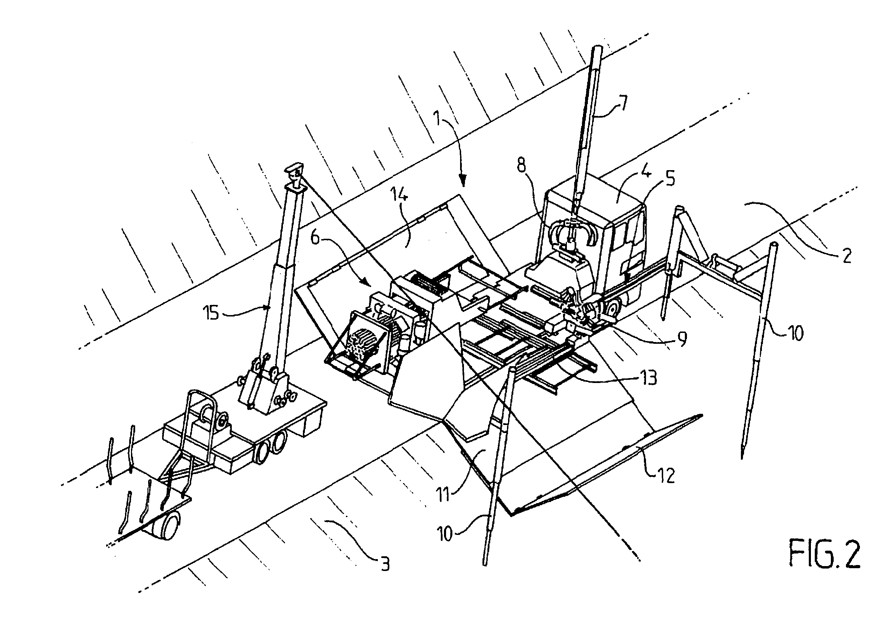

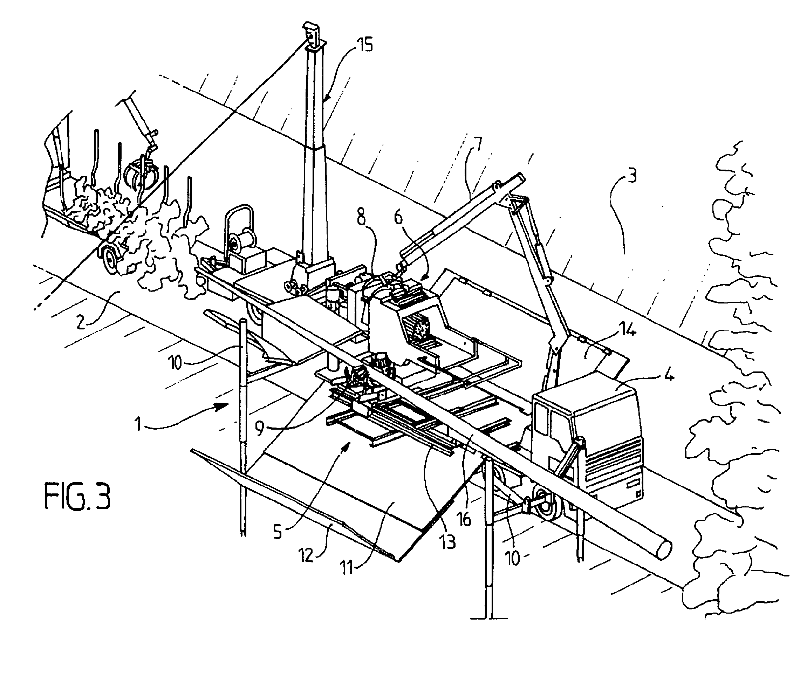

Les figures 1 à 3 représentent un camion 1 pour chantier forestier. Sur la figure 1, le camion 1 est dans un mode de déplacement et, sur les figures 2 et 3, il est dans un mode de travail. Le camion 1 accède au chantier par un chemin 2 étroit, situé dans une pente 3. Par exemple, le camion 1 circule en marche arrière sur le chemin 2 pour accéder au chantier, puis en marche avant pour évacuer le chantier.

Le camion 1 comprend une base châssis-cabine 4 sur laquelle sont montés les équipements utilisés pour le chantier. Ainsi, le camion 1 comprend également une machine de façonnage 5, une fagoteuse 6 et une grue 7 à grappin 8.

La machine de façonnage 5 comprend une tête de façonnage 9, des supports 10 à pieds télescopiques, et un plateau de récupération formé par un panneau 11 et un panneau 12. La tête de façonnage 9 est montée sur un chariot mobile sur des rails 13. Les rails 13 incluent des rails transversaux et un rail longitudinal, permettant un déplacement de la tête de façonnage 9 dans les deux directions.

Sur la figure 1, le camion 1 est en mode déplacement sur route. Dans cet état, les panneaux 11 et 12 forment respectivement un panneau latéral et un panneau de dessus du camion 1. Le camion 1 comprend également une paire de panneaux 14 du côté opposé aux panneaux 11 et 12. La machine de façonnage 5 et la fagoteuse 6 sont situés essentiellement à l'intérieur de l'espace délimité par les panneaux 11, 12 et 14.

Sur les figures 2 et 3, le camion 1 est en mode de travail à droite. Dans cet état, la machine de façonnage 5 est déployée. Plus précisément, les panneaux 11 et 12 sont dépliés dans la pente 3 et la tête de façonnage 9 a été déplacée au-dessus des panneaux 11 et 12, grâce aux rails 13. Les supports 10 sont déployés dans la pente 3, de part et d'autre de la tête de façonnage 9. Leurs pieds télescopiques permettent de s'adapter à la pente 3. Les panneaux 14 sont également inclinés pour libérer de l'espace à côté de la fagoteuse 6.

Le camion 1 présente également un mode de travail à gauche, non représenté, permettant le travail lorsque la pente descend du côté gauche du camion 1. Ce mode de travail est symétrique de celui de la figure 2 : Les panneaux 14 sont dépliés et la tête de façonnage 9 est déplacée de l'autre côté par rapport à la figure 1. Le camion 1 comprend des supports (non représentés) symétriques des supports 10.

Le fonctionnement du camion 1 est le suivant.

La grue 7 saisit un arbre 16 qui a été amené à proximité du camion 1, par exemple par un câble-mât 15. L'arbre 16 est placé dans la machine de façonnage 5, dans laquelle il est supporté par la tête de façonnage 9 et l'un des supports 10. La tête de façonnage 9 façonne l'arbre 16 et les rémanents tombent dans le plateau de récupération formé par les panneaux 11 et 12.

Lorsqu'un arbre 16 est complètement façonné, il est saisi par la grue 7 qui le pose à proximité, par exemple sur le côté du chemin 2. Ensuite, la grue 7 saisit un nouvel arbre pour une nouvelle opération de façonnage.

Pendant une opération de façonnage d'un arbre, la grue 7 saisit des rémanents dans le plateau de récupération. Il peut s'agir des rémanents de l'arbre en train d'être façonné et/ou de l'arbre précédemment façonné. Les rémanents récupérés sont déplacés par la grue 7 dans la trémie d'entrée de la fagoteuse 6, qui les rassemble en fagot.

Autrement dit, le camion 1 permet de réaliser simultanément les opérations de façonnage et de fagotage. Il n'est pas nécessaire de réaliser le chantier en deux temps, avec deux véhicules équipés d'outils différents. Il n'est pas non plus nécessaire de stocker des rémanents non fagotés sur le chantier. Le camion 1 permet donc un gain de temps et une économie d'équipement.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

Par exemple, l'invention ne concerne pas uniquement un camion, mais plus généralement un véhicule, par exemple un véhicule automoteur ou une remorque.

## Revendications

1. Véhicule (1) pour chantier forestier comprenant une fagoteuse (6), une machine de façonnage (5) et un dispositif de manipulation (7), ladite machine de façonnage comprenant une tête de façonnage (9) **caractérisé par le fait qu'**elle comprend également un plateau de récupération des rémanents, ledit dispositif de manipulation étant apte à saisir des rémanents dans ledit plateau de récupération et à les amener dans la fagoteuse pendant le fonctionnement de la machine de façonnage.

2. Véhicule selon la revendication 1, dans lequel ledit plateau de récupération comprend un premier panneau (11) et un deuxième panneau (12) articulés, ledit véhicule présentant un mode de travail dans lequel ladite tête de façonnage est située au-dessus desdits premier et deuxième panneaux, et un mode de déplacement dans lequel ledit premier panneau est disposé sensiblement verticalement et forme une paroi latérale du véhicule, ledit deuxième panneau étant disposé sensiblement horizontalement et forme une paroi de dessus dudit véhicule, la tête de façonnage étant située à l'intérieur de l'espace délimité par ladite paroi latérale et ladite paroi de dessus.

3. Véhicule selon la revendication 2, dans lequel ladite machine de façonnage est montée sur un chariot sur rails (13) permettant un déplacement de la machine de façonnage entre le mode de travail et le mode de déplacement.

4. Véhicule selon l'une des revendications précédentes, dans lequel ledit dispositif de manipulation est une grue à grappin (8).

5. Véhicule selon l'une des revendications précédentes, dans lequel ladite machine de façonnage comprend au moins un support (10) à pieds télescopiques.

6. Utilisation d'un véhicule (1) selon l'une des revendications précédentes, comprenant le fait de saisir des rémanents avec ledit dispositif de manipulation dans ledit plateau de récupération, et de rassembler les rémanents saisis en fagot avec la fagoteuse, pendant le fonctionnement de la machine de façonnage.

## Claims

1. Vehicle (1) for logging sites including a bundler (6), a tree processing machine (5) and a handling device (7), said tree processing machine including a tree processing head (9), **characterized in that** it also includes a slash collecting platform, said handling device being able to pick up slash on said collecting platform and to move it into the bundler during operation of the tree processing machine.

2. Vehicle according to Claim 1, wherein said collecting platform includes a first articulated panel (11) and a second articulated panel (12), said vehicle has a working mode in which said tree processing head is located above said first and second panels and a travelling mode in which said first panel is disposed substantially vertically and forms a side wall of the vehicle, said second panel is disposed substantially horizontally and forms a top wall of said vehicle and the tree processing head is located inside the space delimited by said side wall and said top wall.

3. Vehicle according to Claim 2, wherein said tree processing machine is mounted on a carriage on rails (13) allowing movement of the bundler between the working mode and the travelling mode.

4. Vehicle according to any one of the preceding claims, wherein said manipulator device is a crane with a grab (8).

5. Vehicle according to any one of the preceding claims, wherein said tree processing machine comprises at least one support (10) with telescopic legs.

6. Use of a vehicle (1) according to any one of the preceding claims to pick up slash on said collecting platform by means of said handling device and assemble the picked up slash into bundles by means of the bundler during operation of the tree processing machine.

## Patentansprüche

1. Fahrzeug (1) für ein Holzlager, das eine Bündeleinrichtung (6), eine Bearbeitungsmaschine (5) und eine Handhabungsvorrichtung (7) umfasst, wobei die Bearbeitungsmaschine einen Bearbeitungskopf (9) umfasst, **dadurch gekennzeichnet, dass** es weiterhin eine Schale zur Rückgewinnung von Restholz umfasst, wobei die Handhabungsvorrichtung während des Betriebs der Bearbeitungsmaschine Restholz in der Rückgewinnungsschale erfassen und es der Bündeleinrichtung zuführen kann.

2. Fahrzeug nach Anspruch 1, wobei die Rückgewinnungsschale eine angelenkte erste Platte (11) und zweite Platte (12) umfasst, wobei das Fahrzeug einen Arbeitsmodus, in dem sich der Bearbeitungskopf über der ersten und der zweiten Platte befindet, und einen Bewegungsmodus aufweist, in dem die erste Platte im Wesentlichen vertikal angeordnet ist und eine Seitenwand des Fahrzeugs bildet, wobei die zweite Platte im Wesentlichen horizontal angeordnet ist und eine Oberwand des Fahrzeugs bildet, wobei sich der Bearbeitungskopf innerhalb des durch die Seitenwand und die Oberwand begrenzten Raums befindet.

3. Fahrzeug nach Anspruch 2, wobei die Bearbeitungsmaschine auf einem auf Schienen (13) geführten Laufwagen montiert ist, der ein Bewegen der Bearbeitungsmaschine zwischen dem Arbeitsmodus und dem Bewegungsmodus gestattet.

4. Fahrzeug nach einem der vorhergehenden Ansprüche, wobei die Handhabungsvorrichtung ein Greiferkran (8) ist.

5. Fahrzeug nach einem der vorhergehenden Ansprüche, wobei die Bearbeitungsmaschine mindestens einen Träger (10) mit Teleskopbeinen umfasst.

6. Verwendung eines Fahrzeugs (1) nach einem der vorhergehenden Ansprüche, umfassend das Ergreifen von Restholz mit der Handhabungsvorrichtung in der Rückgewinnungsschale und das Zusammenbringen des als Bündel ergriffenen Restholzes mit der Bündeleinrichtung während des Betriebs der Bearbeitungsmaschine.
